# EUROPEAN PATENT APPLICATION

(11) **EP 1 905 514 A1**
(43) Date of publication of application: **02.04.2008**
(21) Application number: 06020670.3
(22) Date of filing: 30.09.2006
(51) Int. Cl.: B01L 3/00, F15C 5/00, B29C 45/16, G01N 35/10

(54) **Device having a reversibly closable fluid valve**

(71) Applicant: Roche Diagnostics GmbH, 68298 Mannheim (DE); F.HOFFMANN-LA ROCHE AG, 4070 Basel (CH)
(72) Inventor: Sarofim, Emad, 6332 Hagendorn (CH); Savatic, Goran, 6403 Kuessnacht am Rigi (CH); Kopp, Martin, Dr., 6332 Hagendorn (CH); Elsenhans, Olivier, Dr., 5643 Sins (CH)
(74) Representative: Poredda, Andreas

(57) **Abstract**

A device comprising a valve in a tubular channel (3) to open and close said channel (3), said valve being formed by a first wall (2) of said tubular channel, said first wall (2) being made of a thermoplastic elastomeric material, and a second wall being made of a thermoplastic material, said first wall (2) and said second wall being irreversibly bonded to each other is disclosed. The device can be used advantageously for reliable analyses in automated procedures, e.g., to control fluid flows within said device.

## Description

### Field of the invention

The present invention relates to a device having a reversibly closable fluid valve, methods for manufacturing such a device, a system for analysis of a fluid using said device, the use of said device in analyses of fluids and a method of analysis using said device.

### Background of the invention

Particularly in analytical laboratories there is a great interest in conducting analysis in a convenient, safe and reliable way. Particular problems are the contamination of reagents, samples and devices for performing an analysis by the environment and the contamination of the environment by reagents or samples. The tightness is often a very essential function, to assure safe and reliable use of such devices.

Therefore devices have been proposed for processing of a sample and reagents allowing treatment of fluids in complex patterns.

In EP 0 687 502 there is disclosed a device having three chambers connected by channels allowing the control of fluid from one chamber to one of the others by the use of a three-way valve. Three way valves, however, are difficult to incorporate and operate in procedures conducted in analytical instruments.

US 5.593.130 describes a valve for the use in a microfluidic structure, in which the material fatigue of the flexible valve membrane and the valve seat is minimized by a two-step construction and the fact that both the membrane and the seat are constructed from elastic material.

In WO 02/01081 there is described a valve which consists of a rigid layer, a flexible layer and a ball actuator. The valve can reversible be closed by pressing said ball towards said rigid layer, thus forcing said flexible layer to close the channel between said rigid layer and said flexible layer. The construction of said ball actuator comprising device is complex and, therefore, the device is less suitable to be used as a one-use disposable device in an economic way. Moreover, the multilayered construction needs several elements to be assembled.

WO 04/011147 describes a microfluidic device comprising an elastically deformable cover layer and a less deformable substrate, wherein said cover layer is connected to a deformer deforming an intermediate wall or a sidewall portion of a recess to form a barrier wall separating two portions of the recess. The presented valves are operable for a single time (that means are either a close-once or open-once valve). Such valves are limited to certain applications.

Additional microstructure or micro fluidic devices having a complex design and, moreover, requiring particular skills and considerable resources for making the devices available are described in US 5.962.081 and US 5.932.799, respectively.

Furthermore, DE 102.39.597 describes a disposable cassette comprising a first part containing a channel structure for the purpose of fluid guidance and a second part, wherein the first part is tightly closed by the second part, a type of rigid cover plate. The kind of sealing between both parts is, however, not further described. Without such information and, e.g., by the simple use of pressure to seal the areas between the thermoplastic elastomers and the cover, the device would start to leak after a certain time, in particular due to the high cold flow properties characteristical for almost all thermoplastic elastomers.

It was, therefore, an object of the present invention to provide a device with a reliable, reversibly closable valve, which can be easily and economically manufactured.

### Summary of the invention

A first subject of the invention is a device having a body comprising a valve located in a tubular channel designed to close or open said channel, wherein the valve is consisting of at least one flexible wall within the channel, made from a thermoplastic elastomeric material.

The second subject of the invention is a method for manufacturing such a device comprising a valve in a tubular channel. The device can in particular be produced by first producing a part made soley of a thermoplastic elastomeric material, preferably by using a 1-compound injection molding process.

Alternatively, the device can be manufactured by first producing a body (10) containing a rigid (1) and a elastomeric thermoplastic material (2) within a two step injection molding process: The thermoplastic elastomeric material (forming at least one wall of the valve) of the body is shaped within a two step injection moding procedure, wherein successively a rigid and an elastomeric compound are shaped in mold(s) reflecting the shapes of the rigid and elastomeric part, and wherein the two elements (the elasomeric and the rigid material) adhere to each other.

Subsequently, a cover part or sealing wall (5) is irreversibly bonded to the result of said first produced part, such that a tubular channel is formed between said thermoplastic elastomeric material and said cover part forming a first and second wall.

Still another subject of the invention is a system for analyzing a liquid comprising a device, said device comprising a valve and an instrument comprising an actuation module moving an actuator (8) to deform the elastomeric element, e.g., a flexible membrane (2) of the device through an actuation hole (4). By this deformation of the section (4) of the flexible membrane (2) an originally open cross-section (9) may be closed. By rebouncing forces of the membrane or by a pressure difference from the fluid towards the devices outside the valve opens, when the actuator is removed. The position of the instrument's actuator, relative to the device, defines, therefore, whether the valve is fully open, partially open or closed. The instrument therefore controls the status of the valve.

Still another subject of the invention is a method of analyzing a fluid or components thereof comprising using a system according to the invention. The method comprises in particular the following steps.
- providing a device according to the invention,
- introducing the fluid, e.g., a sample and one or more reagent(s), into said device through a fluid port of the device,
- determining one property or change of a property of said fluid or component relating to the absence or presence or concentration of an analyte present or potentially present in the fluid,
- actuating a valve for opening and/or closing and/or partially opening and/or partially closing a valve of the device.

### Brief description of the drawings

Fig. 1 shows a first embodiment of the invention. (a) shows a cut view through the body (10), having a rigid (1) and elastomeric element (2) along the plane A-A. (b) shows a bottom view of the body (10). (c) shows the cut view through the assembled device along the plane A-A. The body (10) from (a),(b) is assembled to a cover part (5). (c) shows the device when the valve is open, (d) when the valve is closed.
Fig. 2 shows a second embodiment of the invention. (a) shows a cut view through the body (10), having a rigid (1) and elastomeric element (2) along the plane A-A. (b) shows a bottom view of the body (10). (c) shows the cut view through the assembled device along the plane A-A. The body (10) from (a),(b) is assembled to a cover part (5). (c) shows the device when the valve is open. (d) shows the a top view of the cover part (5).

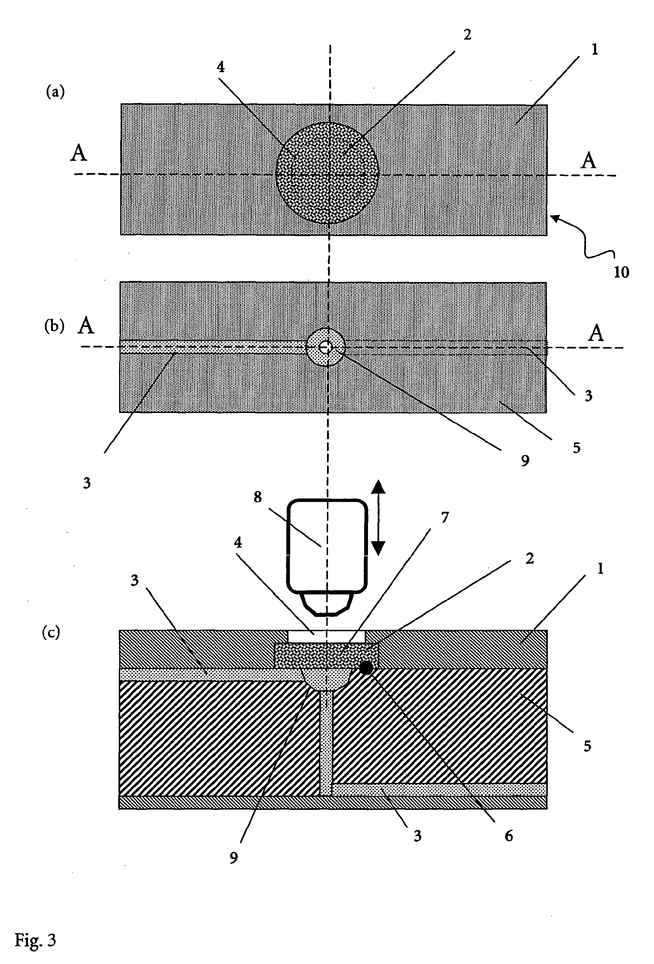

Fig. 3 shows a third embodiment of the invention. (a) shows a bottom view of the body (10), having a rigid (1) and and elastomeric (2) part. (b) shows a top view of the covering part(5). (c) shows a cut view along the plane A-A of the device in assembled state.

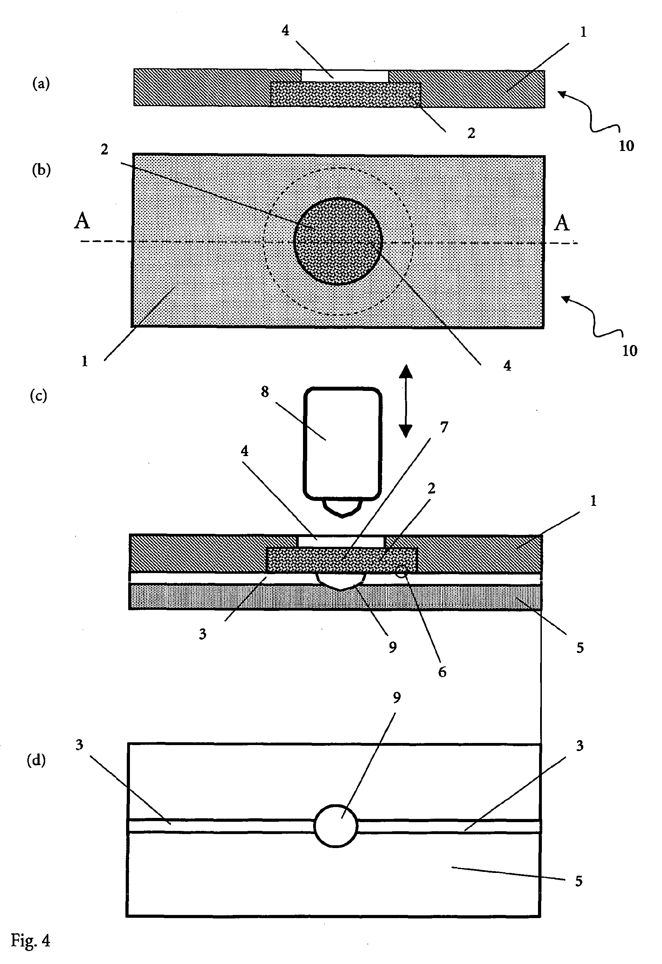

Fig. 4 shows a fourth embodiment of the invention. (a) shows a cut view through the body (10), having a rigid (1) and elastomeric (2) part, along the plane A-A. (b) shows a top view of the body (10). (c) shows the cut through the assembled device along the plane A-A. The body (10) from (a),(b) is assembled to a cover part (5). (c) shows the device when the valve is open, (d) shows the a top view of the cover part (5).
Fig. 5 shows a fifth embodiment of the invention. (a) shows a bottom view of the element being solely made of an elastomeric material (2). (b) shows a cut view along the plane A-A, where the element from (a) is assembled to a covering wall (5).
Fig. 6 shows a perspective view to an embodiment of the invention. The figure shows a section of a device having a valve. The body (10) was made from a rigid (1) and and an elastomeric (2) material.

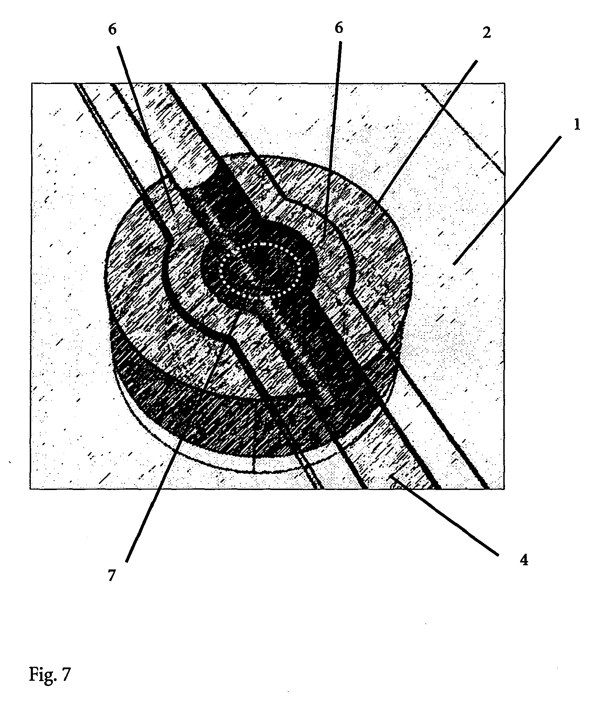

Fig. 7 shows a more detailed view of the body (10) showed in Fig. 6.

### Detailed description of the invention

A device having a body comprising a reversibly closable fluid valve in a tubular channel to close and/or open said channel, characterized in that said valve is formed by
- a first wall of said tubular channel made of a thermoplastic elastomeric or a rigid and a elastomeric thermoplastic material, and
- a second wall of said tubular channel made of a thermoplastic elastomeric material, said first wall and said second wall being irreversibly bonded to each other.

The device is further characterized by being a container for holding, delivering, receiving or analyzing a fluid and preferably comprises one or more chambers to receive and/or process a fluid.

The thermoplastic rigid material of the tubular channel of the device is preferably selected from the group consisting, for example, of polyolefins, polypropylene, polyethylene, polystyrene, polycarbonate and polymethylmethacrylate.

The thermoplastic elastomeric material is preferably selected from the group consisting, for example, of thermoplastic elastomeric polyolefins, thermoplastic elastomeric polyurethanes, thermoplastic elastomeric styrol-block polymers and thermoplastic elastomeric vulcanicates.

The device of the present invention is in particular useful in receiving a fluid or/and storing a fluid or/and chemically or physically treating a fluid or / and analyzing a fluid and/or measuring a physical or chemical property of a fluid.

The device may have several equal, similar or various sections, wherein one or more than one fluid(s) may be analyzed, e.g., sequentially or in parallel.

Said fluid can be a sample, a reagent, a diluent, a gas or a process fluid or a combination thereof or a fluid derived therefrom. It can be liquid or gaseous.

The size of the device according to the invention is mainly determined by the number of sample(s) to be processed, the amount of fluid to be held or processed in the device and by the kind and number of steps to be performed. In a first embodiment, the device is used as a means to isolate components of the fluid. The components will be retained in the device, while the remainder of the liquid is allowed to exit the device or flow to a waste chamber connected with the device. The total volume assumed by the device will be preferably between 100 µl and 30 ml.

Optionally the device has a substantially flat structure, i.e., it has in its main part a thickness of less than 50 mm, preferably of between 0.5 and 30 mm, a length and width of less than 300 mm, preferably of between 10 and 150 mm.

For receiving and maintaining a fluid, the device has a body, which further contains one or more cavities, which temporarily or continuously receive or/and maintain the fluid or a fluids derived therefrom.

Conveniently, the body of the device is formed from at least one relatively rigid polymer. Polymers for the body according to the present invention are preferably selected from the group consisting of a thermoplastic material, for example, polypropylene, polyethylene, polystyrene, polycarbonate and polymethylmethacrylate. Further preferred, the body is made of a material, which can be liquefied by heating above its melting temperature, and which in molten state can be introduced into a mold to reflect the particular form the body or a part thereof.

The device according to the invention contains at least one channel. The use of the channel can be various. In general, the channel(s), if the valve is open, allow(s) flow of matter through the channel, e.g.,
- delivery of fluid through a channel from one location to a second location,
- delivery of fluid in or out of the device,
- allowing "passive fluid communication", e.g., allowing venting of a chamber,
- closing fluids in or out of a device,
- directing fluids from a first target location to a second target location,
- modulating flows (by partially opening and closing the valve),
- control of a hydraulic or pneumatic fluid.

If the valve is closed, the fluid communication is inhibited.

The device may, furthermore, comprise at least one chamber. Typical volumes of a chamber within the device depend on the use and may vary from 0.2 µl to 100 ml, preferably from 0.2 µl to 20 ml. The cavities of the chamber can have different forms adapted to the various intended uses of the device.

The use of those chambers can be various, e.g.,
- storing, receiving, delivering fluid(s),
- processing a fluid, e.g., for analyzing a matter in the fluid,
- adapting to measure a physical of chemical property of a fluid (e.g., for performing optical absorptions or fluorescence measurement)

A core of the present invention is the presence of at least one tubular channel. The channel has typically a cross-section area (corresponding to an area orthogonally located to the main flow direction) of 0.001 mm² to approx. 10 mm². Preferably, the cross-sectional area is in a range of 0.0025 mm² to 1 mm². The channel has preferably a semi-circular shape, a rectangular shape, a triangular shape or even a circular shape. The breath and depth of the channel are according to the invention in a range of 0.03 mm to 4 mm. Most preferred, the respective range is within 0.05 mm to 1 mm.

The term micro fluidic device refers to a cross-sectional area of the channel being less than 1 mm².

The term tubular channel refers to the fact, that the channel is not an open channel; that means the channel or fluid path is closed by all sides along at least a part of the fluid path.

The device can contain further elements that may be useful for the intended purpose of the device. For example, heat transferring walls or heating elements may be integrated into either the sealing wall (5) or the body (10). The heat transferring wall can be used to heat or/and cool fluids contained in the device.

In another embodiment electrodes can be incorporated into the body or the sealing wall. Electrodes can be used to determine the electrochemical status of fluids contained in the device or to start electrochemical reactions within the device. In this case, the device will have appropriate connectivity to electrical circuits.

In another embodiment optical windows (allowing an at least partial transmission to a wavelength) can be incorporated to the body or sealing wall.

The device according to the present invention is designed to hold, deliver and/or receive a fluid. In order to introduce fluid into or/and remove fluid into/from the device, the device according to the present invention may have one or more fluid ports. Furthermore, the device can be used for holding a fluid within the cavity, more preferable in two or more cavities. Furthermore, a fluid contained in the device can also be delivered to the outside, for example, by forcing the fluid to the exit of the cavity through the fluid port in the device. This fluid port can be the same or a different fluid port used to introduce the fluid into the device. Forcing a liquid out of the device may require asserting pressure to force the liquid through the fluid port, or may require applying negative pressure or even a vacuum to the cavity.

The device may, furthermore, harbor particular functions, e.g., microfluidic functions. Those can be static elements, like fittings, comprising walls and surfaces, for example for mixing, dividing or combining of fluids. Other functions that may be provided by the cavity are optical functions. For this reason, the body around said cavity, preferably a chamber, is transparent to allow entering or/and escaping light from the cavity to the outside of the device. Preferably, the cavity has dimensions that allow collecting fluid in an amount that is sufficient for reliable detection of components contained in the fluid. Another function of the cavity may be to receive materials to react with the fluid. Such materials may be selected from the group consisting of soluble or insoluble reagents, or combinations thereof, or both, even in separate parts of the cavity, or chambers. Soluble reagents may be reagents to support lysis of a sample, to amplify a nucleic acid contained in the sample or a liquid derived therefrom, or to provide a signal when reacting with the components of the sample to be determined. Insoluble reagents may be solid substances or materials that are designed to immobilize components of the fluid, or compounds derived therefrom. Examples for nucleic acid immobilizing materials are glass fleece or magnetic particles, which are capable to bind nucleic acids from a solution comprising, e.g. a chaotropic reagent. Appropriate materials are known to the person skilled in the art of nucleic acid sample preparation.

According to the present invention, the elastomeric thermoplastic part (2) of the device is made of an elastomer, which is shaped in an injection molding process. The material of the elastomer is preferably selected from the group consisting of thermoplastic elastomers (TPE), thermoplastic vulcanicates (TPV), and vulcanizible elastomers (VE), materials which are suitable to be used in injection molding processes. If a 2-compound (2C) injection molding is used, the TPE is selected to have sufficient adhesion to the rigid material. Moreover, the TPE is selected to form a strong irreversible bond with a covering wall applied in an assembly step once the elastomeric part is shaped.

The force targeted between the elastomeric and the rigid thermoplastic material depends on the final use of the device. The force in particular depends on the pressure present during the process and the targeted tightness. Usually, the force for adhesion between the elastomeric and the rigid material is at least 0.1N, typically more than 1 N.

The material also has to be selected to have no intolerable negative effect to the analysis, e.g., has to be sufficiently resistant to the reagents and sample applied, and may not have an intolerable inhibiting effect to the assay.

Several thermoplastic elastomers are suitable as (at room temperature) elastomeric materials, e.g., thermoplastic polyolefins (TPO) or thermoplastic polyurethanes (TPU) or styrol-block-copolymers (SBS, SEBS). Moreover, TPVs, thermoplastic vulcanicates, which are a special class of TPE that containing a cross-linked rubber phase dispersed within a thermoplastic polymer phase, can be used. TPVs offer elastomeric characteristics similar to cross-linked rubbers, but are processable as thermoplastic polymers.

Further details on TPE are known in the art and can, for example, be taken from the publications of the British Plastics Federation, e.g.,
http://www.bpf.co.uk/bpnndustry/plastics materials thermplasrubber TPR.cfm.

A preferred material combination for the analysis of nucleic acids by means of polymerase chain reaction (PCR) is the combination of polypropylene as rigid material and TPO as elastomeric material.

A thermoplastic elastomer (TPE) has the property to liquefy when heated to a temperature above its melting point without decomposition, and when cooled to a temperature below its melting point will solidify reflecting the geometrical form of the mold in which it is kept. A preferred thermoplastic elastomer is Santoprenes^{®} from the company Advanced Elastomere Systems. Preferred thermoplastic elastomers have a processing temperature between 150 and 220°C. The elastomer has in its final shape, at the temperature of use (0 to typically less than 100°C), a shore hardness of 0 A to 100 A, preferably in a range from 20 A to 80 A.

In case the covering wall or part (5) is sealed to the elastomeric part (2) by using an irradiation source (e.g., a laser, e.g., in a laser welding process), the thermoplastic elastomeric material may additionally contain an absorber for the irradiation, e.g., a pigment (e.g. carbon powder), in order to give absorption to the irradiated energy and allowing the material to be heated up.

The rigid material (1) of the body (10) is preferably a material selected from the group of thermoplasts. Particularly preferred thermoplasts are polypropylene, polyethylene, polystyrene, polycarbonate and polymethylacrylate. The rigid thermoplastic material also has to be selected to have no intolerable negative effect to the analysis, e.g., has to be sufficiently resistant to the reagents and sample, and may not have an intolerable inhibiting effect to the assay.

Preferred mechanical properties of the rigid material are the following: Tensile modulus (modulus of elasticity, Young's modulus) in the range from 0.1 to 20 GPa; tensile strength in the range from 10 to 300 MPa, at room temperature. The rigid material is selected to have sufficient mechanical properties at the particular temperature of use.

According to the definition of a thermoplast, the material is at an elevated temperature a more or less viscous liquid. In this liquefied form the material is injection moldable. At a lower temperature the material behaves like a solid material showing rather rigid properties.

If an optical window is included into this material, the material must also have a sufficient transparency to the wavelengths used. In such a case usually a transparency of more than 10% of the window is required, more preferred more than 70%, most preferred more than 85% is used.

In case the covering wall or part (5) is sealed to the rigid material of the body (10) by using an irradiation source (e.g., a laser, e.g., in a laser welding process), the rigid material may additionally contain an absorber for the irradiation, e.g., a pigment (e.g. carbon powder), in order to give absorption to the irradiated energy and allowing the material to be heated up.

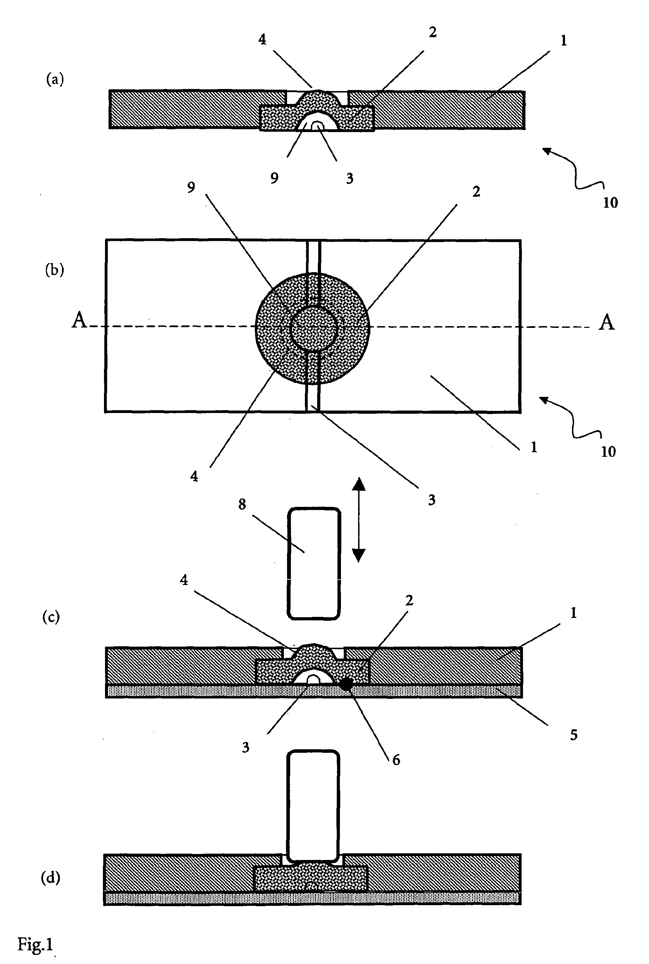

In a first preferred embodiment the covering wall is a thin layered material (Fig. 1). The thickness is in a range of 30 to 500 µm, most preferred in a range of 40 to 250 µm. In this case the covering wall (5) is made of one single material, or may be a composite material, e.g., made of several layers of different materials, laminated to each other. At least the part of the covering wall which is involved in the joining process is preferably made from a thermoplastic polymer.

Optionally the sealing wall comprises more than one layer. In example 1 shown, the covering wall (5) comprises a first layer made of a material which is inert with respect to the sample liquid and a second layer which is made of a suitable metal, preferably aluminum. The covering wall (5) is, e.g., made from a commercially available thermal sealing foil. The second layer provides an efficient way for transporting heat through the covering wall, during heat sealing of the covering wall (5) with the body (1). Preferably, the thickness of the covering wall (5) is as small as possible while still ensuring sufficient mechanical strength for reliably sealing the device.

A low thermal capacity and high heat transfer rates of the covering wall (5) are advantageous as they enable faster heating and cooling of the device, respectively of fluids therein. Usually, the thickness of the covering wall should not exceed 1 mm, preferably it is below 500 µm. In order to ensure sufficient mechanical strength for a reliable sealing of the device it should be at least 50 µm. Especially advantageous is a thickness of 50 µm to 350 µm, more advantageous of 60 µm to 200 µm. Aluminum is particularly well suited as material for the second layer of the covering wall (5) as it has a very low thermal capacity. However, other materials can also be used as well. The thickness of the second layer is preferably from 20 µm to 400 µm, especially 20 µm to 200 µm. The function of the first layer is mainly to form and guarantee a tight sealing with the body during or after the sealing process. Finally, to prevent the contact between the liquid sample and the second layer it is advantageous to provide the first layer with a thickness as small as possible while still ensuring a continuous layer. The thickness of the first layer should, therefore, be less than 300 µm, preferably less than 200 µm, especially less than 100 µm. Particularly preferred is a thickness of the first layer of 0.1 µm to 80 µm.

In a composite foil according to the invention the foil comprises a first layer and a second layer. The first layer can be laminated to the second layer or sprayed, painted or, for example, vapor deposited on the second layer. Additional layers can be added to the covering wall (5), for example a coat of paint to protect the second layer. The overall heat transfer rate of the covering wall (5) is at least 200 Wm⁻²K⁻¹, preferably at least 2000 Wm⁻²K⁻¹_{.}

As shown in Example 1, the covering wall (5) can, e.g., a commercially available thermal sealing foil, having a 30 µm PP foil laminated to a 110 µm aluminum carrier. The foil showed to form a strong bond with a PP body and also to the used thermoplastic elastomeric material, when they are joined thermally.

The covering wall, in case of a thin layered material, if available as a commercial material, is shaped by punching the outer contour. Alternatively, laser cut or yet cutting measures may be used. Supplementary, structures, e.g., channels, may be embossed to this element.

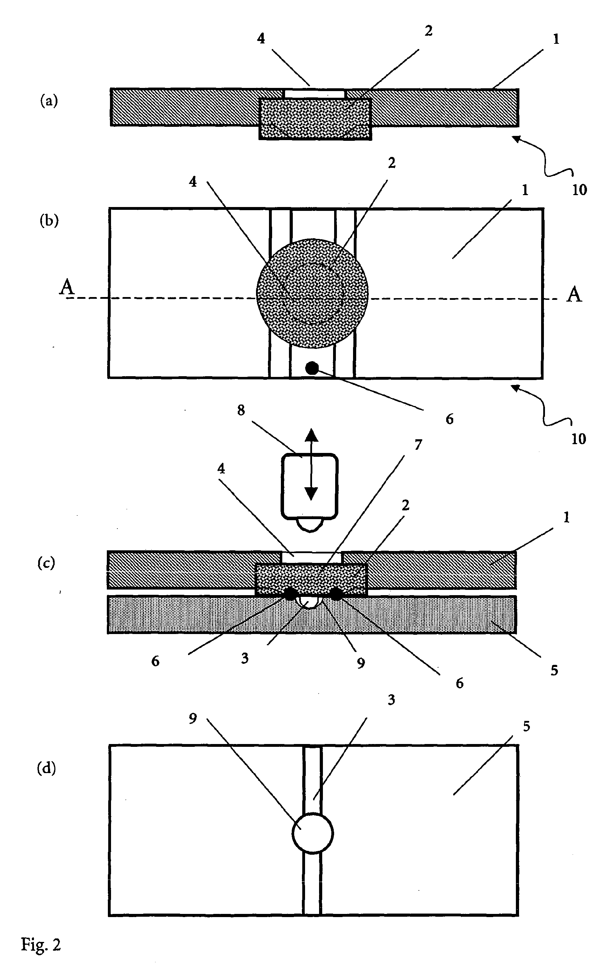

Secondly (see Fig. 2), the covering wall (5) may be made of one material (or several materials) which is transparent to a irradiation source used in the sealing process. In this second case a high heat conducting property of the covering wall (5) is not mandatory for the material selection, but the sufficient transparency of material to the irradiation wavelength(s). The method of using a irradiation source allows therefore often a larger thicknesses of the covering wall, as long the transparency to the irradiation wavelength is sufficient. A larger thickness of the covering wall (5) may allow to include supplemental functions and supplemental structures to this element (e.g., channel and chamber walls, detection windows, through wholes etc.). The material is supplemental to the covering wall (5) selected to form a tight bond with the body respectively the rigid and/or elastomeric part of the body. In many cases it is advantageous, e.g., if the rigid material (1) of the body (10) is, e.g., polypropylene, to use polypropylene as material for the covering wall (5), as well as the material is selected to be compatible with the assay (e.g., showing no intolerable interferences with the sample or reagents). A preferred method for shaping the covering wall for this second alternative implementation of the invention is injection molding. Preferred materials for this second version of covering wall are, therefore, thermoplastic polymers.

The device according to the invention is an assembly of at least two elements or parts: a body (10) and a covering wall (5). An essential element of this invention is the method of joining the two parts together tightly (that means the two parts are irreversibly bonded) to form the assembly.

This term "irreversibly bonded" corresponds to a force which allows the device to hold fluid within the device without leakage. The tightness is in particular maintained without pressing the two parts, body (10) and covering wall (5), together, rather by, e.g., thermo sealing or thermo welding.

The body (10) and the covering wall (5) are usually produced independently and supplied to an assembly apparatus. According to the invention at least one bond between a thermoplastic elastomeric material and a thermoplastic rigid polymer material is achieved.

Two joining or binding methods are preferred to seal the two parts together. Both methods use the fact that by heating the materials (temporarily) above a transition temperature, the parts become capable to alloy into each other. After cooling down the parts below the transition temperature a strong binding is present between the two parts.

The two variants of methods mainly deviate in the method of heat introduction. The first method variant uses heat introduction by heat conductance through at least on wall (preferably the covering wall (5)). The second method variant uses irradiation energy, transmitted through one part and being adsorbed and converted into heat by the other part. Both variants of methods use generally a clamping force during the assembly to bring the two parts into close contact to each other.

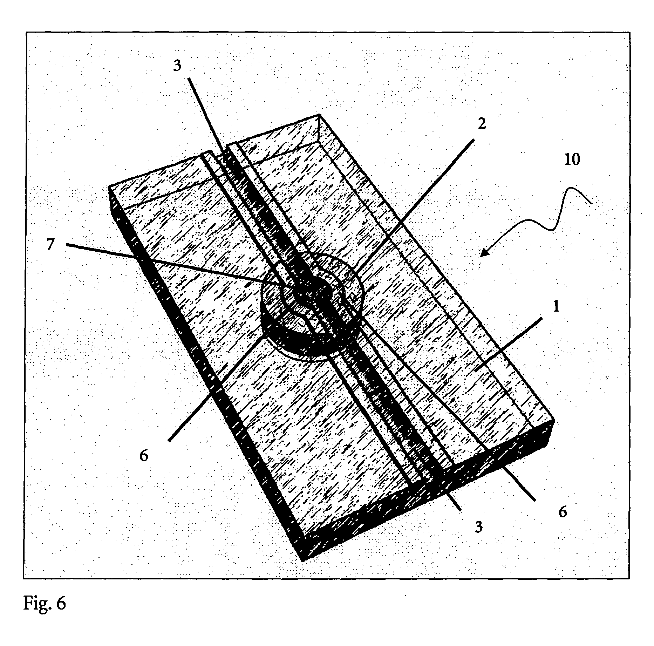

One or both parts being assembled may be constructed to have elevated structures which define the contact area between the two parts (e.g., see Fig. 6, element 6) during assembly.

### In detail the thermal sealing according to the invention can be carried out as follows:

Thermal sealing using heat conductance as heat introduction mechanism: The two parts body (10) and covering wall (5) are generally aligned to each other within a reception. Subsequently, the two parts are pressed together in an apparatus having a heated plunger. The heated plunger is designed to contact the covering wall (5). The heated plunger is mounted to a transfer means of the assembly apparatus. During the assembly step the heated plunger presses the assembly of body (10) and covering wall (5) together for a predefined time, at a predefined pressure, at a predefined temperature of the plunger. After completion of the sealing time the heated plunger moves back and releases the applied force to the assembly. Where required, the assembly apparatus may be designed to run a pressure over time and/or a temperature over time program.

Alternatively, thermal sealing using heat introduction by irradiating electromagnetic energy through a rather transparent covering wall, absorption and conversion to heat of the irradiated energy are applied: The two parts, body (10) and covering wall (5), are ususally aligned to each other within a reception. Also the two parts are clamped together.

The whole bonding area might be irradiated simultaneously or sequentially by, e.g., directing a beam along the contour to be sealing area. As irradiation source can in particular serve lasers or infrared sources. Masks may be used to shade areas where no irradiation should be applied.

After irradiation the two parts unified are released from the reception.

In a very preferred embodiment, the device comprises a first element called "body" carrying a first part of said tubular channel, and a second element called "sealing wall" carrying the second part of said tubular channel. The body preferably comprises further grooves or/and channels. The rigid body provides the stiffness of the device to maintain the shape of any cavities throughout the process of manufacture and use of the device.

However, other known sealing methods may be applied.

A further subject of the present invention is a method for manufacturing a device having a rigid body comprising a valve in a tubular channel, said valve being formed by
- a first wall of said tubular channel made of a thermoplastic elastomeric or a thermoplastic rigid and elastomeric material, and
- a second wall of said tubular channel made of a thermoplastic elastomeric material, wherein said first wall and said second wall being irreversibly bonded to each other, said bonding method comprising
   a) providing a first mold reflecting the shape of the second wall,
   b) injecting into the first mold the thermoplastic elastomeric material in liquefied form,
   c) waiting until said first material has become at least partially solid, and
   d) sealing a thermoplastic rigid material reflecting the first wall to the result of said molding step, such that a tubular channel is formed between said first and second wall.

In particular, the valve according to the invention being formed by a first part (10) and a covering part (5), wherein the first part (10) consists of a thermoplastic rigid material and a thermoplastic elastomeric material, wherein (a) the shape of a first thermoplastic rigid material is given to a first injection molding step using a mold reflecting the shape of a thermoplastic elastomeric element (2), (b) the shape of a thermoplastic elastomeric material is given to a second injection molding step, wherein in the mold of the second injection molding step the product of the first molding step is present and the rigid and elastomeric thermoplastic materials form during said second injection molding step a force fit between said first rigid element (1) and said second elastomeric element (2), and (c) sealing a covering wall (5) to the result of said first and second molding steps, such that a valve is formed between said first part (10) and said covering part (5).

Alternatively, the valve can be formed by a first wall (2) and a covering wall (5), wherein the first wall (2) is consisting of an elastomeric material, wherein (a) the shape of said first wall (2) is provided to a first injection molding step using a mold reflecting the shape of the first wall (2) and (b) sealing said covering wall (5) to result of said molding step, such that a valve is formed between said first wall (2) and covering wall (5).

Another subject of the present invention is a system for analyzing of a liquid comprising
- a device having at least one valve according to the invention,
- the device furthermore having and optical detection window, a heat transfer wall and a fluid port,
- an instrument capable of comprising the device
- the instrument having a valve actuator, temperature control means, a detection system to measure an optical property of a fluid within the device, fluid delivery means and process control means,
- reagents used to perform the analysis.

The liquid being analyzed, can be of any origin. Typically, liquids of biological sources, are, e.g., urine or blood from humans. The sample used may also be pretreated, e.g., the analyte may be isolated from a matrix.

There are additional parameters which may be analyzed. Typical parameters are in particular those giving information to the health status of a living creature, e.g. Chlamydia trachomatis in urine of a human being.

The valve according to the present invention is used to open and/or close a channel before, during or after a process or connected upstream process. The purpose of opening a valve is to enable a fluid to flow through a channel. The purpose to close a channel is to avoid fluid to flow through a channel. A typical application to use the valve is to hold a fluid closed in a compartment during analysis (e.g., to avoid evaporation or uncontrolled fluid flows).

The optical window in the device allows the observation of a fluid respectively of a physical property of the fluid or matter within the fluid. The optical window is sufficient transparent to the waveiength(s) used for the measurement, and has a sufficient size. The size of the optical window is in particular in a range of 0.1 to 20 mm², most preferred from 0.2 to 5 mm².

The heat transfer wall of the device allows to introduce and remove heat from the device or the subject-matter within the device within a rather short time. The heat transfer rate of this wall is, therefore, higher than 200 W/m2/K, most preferred higher than 1000W/m2/K.

The fluid port of the device (one or more) allow fluid communication between the outside and the inside of the device. The fluid port may allow simple gas exchange (e.g., for "venting") or is designed to interface with an instrument to receive, e.g., a sample or reagents used to perform the analysis.

The valve actuator is designed to actuate the valve within the device. Two principle kinds of actuators are available. First a mechanical actor: In this case a more or less solid element (plunger (8)) interacts with the elastomeric part (2) of the device. By deformation of the elastomeric part (2) with the plunger (8) the device's valve is closed. For this case the plunger is moved by a plunger drive. The plunger drive is state of the art. A second principle to actuate the valve's membranes is to use a hydraulic or pneumatic fluid to actuate the membrane. Valves according to the invention may also be used to control the pneumatic or hydraulic fluid.

The temperature control means control and define the temperature of the process or the fluid present within the device. The heat control means can be of any known in the art, e.g., a regulated heated/cooled plate connected to the device. An example of an instrument comprising a heat control means is a thermocycler. Thermocyclers are generally known to apply a profile of different temperatures in repeated manner to a fluid. An exemplary thermocycler is described in EP 236 069. Preferred heating elements are Peltier elements or resistance heating elements. This heat control means is positioned such that it can contact the device at a position, wherein the heat can be used to heat up fluid within the device, preferably when the fluid is contained in a cavity within the device.

The detection system allows to perform the detection of properties or change of properties of the liquid during processes performed in the device, the instrument further can comprise a detection module. Appropriate detection modules are generally known and depend upon the kind of property or property change performed during the presence of the liquid in the device. For example, if the property is a change in an optical signal, for example a fluorescent signal, the detection module will comprise a light source positioned in the instrument such that the device, preferably a chamber in that device, can be irradiated, and an irradiation receiving unit, preferably a light sensitive cell for receiving irradiation from the liquid contained in the device and transmitting an electrical signal to an evaluation unit.

The system according to the invention requires on the instrument a fluid delivery means, which is used to dispense fluid into the device or/and remove liquid from the device. Such fluids can be liquids or gases. The fluids can be a sample or reagent or other process fluids (e.g., hydraulic fluids) used for the analysis. Such fluid delivery means to deliver and remove or receive fluid to and from the device is state of the art: a typical example is syringe pump.

The system according to the invention uses process control means. The controls means performs the analysis according to a program. For automated operation of an analysis the system includes process control means. Such control means are capable to control the instrument and process according to a program. The control means may use a micro-controller, a computer, or programmed logic elements for the execution of a program. The control means executes and controls the program by successive or simultaneous execution of steps of the analysis process. The control means has generally output leads to control actors (e.g., transfer means, pumps.) and input leads to recognition of states of the apparatus. Such control means may also include a user interface with inputs and outputs towards a user of the system.

The system according to the invention furthermore contains reagents. No or several reagents may be used to carry out the analysis. The reagents are generally used to generate from the analyte a signal which is measurable by the instrument (e.g., a colored reaction product which relates to the presence of the searched analyte). The reagents may be provided, e.g., in separate reagents containers or may be provided in reagents compartments of the device.

A further subject of the invention is the use of a device according to the invention in a method for analysis of a sample e.g. in an in-vitro diagnostic test. Therefore, another subject of the present invention is a method of analysis of a sample or components thereof using one or more reagents comprising
- providing a device or a system according to the invention described above,
- introducing a fluid into said device through a fluid port, wherein said fluid is selected from said sample and optionally one or more reagents,
   treating said fluid with one or more of said reagents, and
- determining at least one property of the fluid which relates to the presence or content of a substance present in the sample.
characterized in that said fluid prior or after treatment with said reagent(s) is forced to pass said valve and said valve is closed and/or opened at least once before or after said fluid has passed the valve.

### Reference numerals:

- 1: Thermoplastic rigid element/material
- 2: Thermoplastic elastomeric element/material, TPE (first wall)
- 3: Channel
- 4: Actuation hole
- 5: Cover part (sealing wall; second wall)
- 6: Sealing region between 10 and 5
- 7: Region in the elastomeric element, where the channel will finally be closed with the help of deformation of the elastomeric material present in this section
- 8: Plunger (actuator)
- 9: Valve seat (location where the channel is closed by the valves)
- 10: Body (first part for forming the valve; comprises 2 or 1 and 2)

The present inventive device is further exemplified by using the following material combinations, conditions and procedures:

### 1. Example:

A device having a valve according to the invention was produced. The principle of the assembly is shown in Fig. 1.

The geometry of the valve present in the body of the device is shown in Fig. 6. The channel had a width of 500 µm and a depth of 500 µm. The displayed section in Fig. 6 has outside dimensions of a width of 7 mm, a length of 10 mm and a thickness of 1 mm.

The body (10) is consisting of a rigid thermoplastic material (1) and a elastomeric thermoplastic material (2). The body (10) was produced in a 2 compound injection molding process in a 2 compound injection molding mold having a slider.

The first compound injected was the rigid thermoplastic material. The rigid thermoplastic material was injected to the mold reflecting the shape of the body (10) without the elastomeric part (2). After the first compound solidified, the slider within the mold was drawn, opening a cavity within the mold reflecting the shape of the elastomeric material. Afterwards the liquefied thermoplastic elastomeric material was injected. After a short cooling period the 2 compound injection molded part was ejected from the mold. The body (10) consisted of two materials which are characterized by a strong force fit. A force of more than 1 N was required to separate the elastomeric material from the thermoplastic rigid material at room temperature.

| Thermoplastic rigid material (1) of the body (10): | |
|---|---|
| Material: | Polypropylene |
| Manufacturer: | basell^{®} |
| Type: | Moplen ^{®} RP340R |

| Thermoplastic elastomeric material (2) of the body (10): | |
|---|---|
| Material: | TPE |
| Manufacturer: | Exxon (former: Advanced Elastomere Systems), |
| Type: | Santoprene: 8281-35-W23, Shore 35A |

A cover part (5) according to Fig. 1 with a size to cover the entire side of the body (10) was used. The cover part (5) was made from a laminated foil having a total thickness of 135 µm, and consisting of 2 main layers of 110 µm aluminium and 30 µm polypropylene adhering to each other. The material of the covering part (5) was made from a commercially available heat sealing foil used to seal to polypropylene. The geometry of the cover part was punched.

| Cover part: | |
|---|---|
| Material: | Sealing foil, laminated with aluminium 110 µm with 30 µm PP |
| Manufacturer: | Alcan |
| Type: | Laminated foil ALU 3175 |

The body (10) and the cover part (5) were finally irreversibly bonded to each other by a thermal sealing process. The two parts, body (10) and cover part (5), were aligned to each other in a reception. The body (10) was placed to the reception with the surface carrying the open channels and the open valve structure on the top. To this horizontally located surface of the body (10) the covering part (5) was placed with the polypropylene layer orientated towards the body (down side).

The two parts, body (10) and cover part (5) present and aligned in the reception, were then finally irreversible sealed to each other by applying heat and pressure during a defined time to the back side (top side) of the covering part (being the aluminium layer of the cover (5)). A pneumatic driven heated plate was used.

| Bonding technology: Thermo sealing | |
|---|---|
| Sealing temperature: | 170°C |
| Sealing time: | 1.5 sec |
| Pressure: | 2 bar |

### 2. Example:

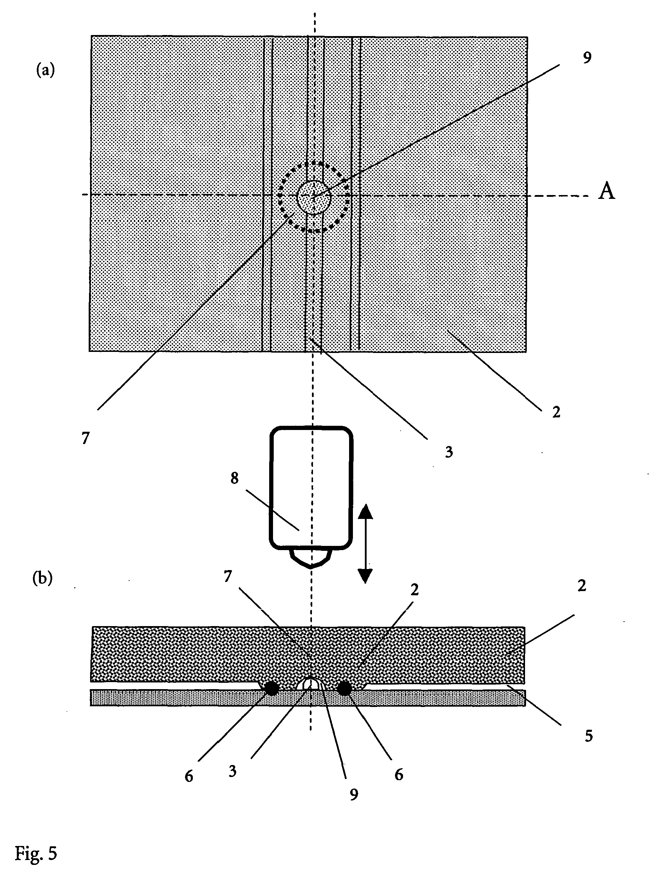

A device having a valve according to the invention was produced. The principle of the assembly is shown in Fig. 5.

The channel had a width of 500 µm and a depth of 500 µm. The geometry was identical to the one displayed in Fig. 6 with the exception that the entire body (10) was made of a single thermoplastic elastomeric material (2).

The body (10) was produced in a injection molding process reflecting the shape of the body (10). The liquefied thermoplastic elastomeric material was injected to the mold. After a short cooling period the molded part was ejected from the mold.

| Thermoplastic elastomeric material (2) of the body: | |
|---|---|
| Material: | TPE |
| Manufacturer: | Exxon (former: Advanced Elastomere Systems) |
| Type: | Santoprene: 8281-35-W23, Shore 35A |

A cover part (5) according to Fig. 5 with a size to cover the entire side of the body (10) was used. The cover part (5) was made from a laminated foil having a thickness of 135 µm, and consisting of 2 main layers of 110 µm aluminium and 30 µm polypropylene adhering to each other. The material of the covering part (5) was made from a commercially available heat sealing foil used to seal to polypropylene. The geometry of the cover part was punched.

| Cover part (2): | |
|---|---|
| Material: | Sealing foil, laminated with aluminium 110 µm with 30 µm PP |
| Manufacturer: | Alcan |
| Type: | Laminated foil ALU 3175 |

The body (10) and the cover (5) part were finally irreversibly bonded to each other by a thermal sealing process. The two parts, body (10) and cover part (5), were aligned to each other in a reception. The body (10) was placed to the reception with the surface carrying the open channels and the open valve structure on the top. To this horizontally located surface of the body (10) the covering part (5) was placed, with the polypropylene layer orientated towards the body (down side).

The two parts, body (10) and cover part (5) present and aligned in the reception, were then finally irreversible sealed to each other by applying heat and pressure during a defined time to the back side (top side) of the covering part (being the aluminium layer of the cover (5)). A pneumatic driven heated plate was used.

| Bonding technology: thermo sealing | |
|---|---|
| Sealing temperature: | 170°C |
| Sealing time: | 1.5 sec |
| Pressure: | 1.5 bar |

### 3. Example:

A set of alternative thermoplastic elastomeric material (2) and a covering part (5) were tested to be heat sealable. The parts were produced according to example 2:

| Thermoplastic, elastomeric element: | |
|---|---|
| Material: | TPE |
| Manufacturer: | Multibase (Dow Chemicals) |
| Type: | Multiflex 935, being of the class of SBS/SEBS |
| | Styrol-block polymer, Shore 50A |

| Cover part: | |
|---|---|
| Material: | Sealing foil, laminated with aluminium, ca. 70 µm PP |
| Manufacturer: | Abgene |
| Type: | AB-0559 |

| Bonding technology: thermo welding | |
|---|---|
| Sealing temperature: | 170°C |
| Sealing time: | 1.5 sec |
| Pressure: | 2 bar |

The two parts showed a very strong (>5N) force fit.

## Claims

1. A device having a body comprising at least one valve in a tubular channel to open and/or close said channel,
**characterized in that** said valve is formed by
- a first wall of said tubular channel made of a thermoplastic elastomeric or rigid and elastomeric material, and
- a second wall of said tubular channel made of a thermoplastic material,
said first wall and said second wall being irreversibly bonded to each other.

2. The device according to claim 1, wherein said first wall is made of a thermoplastic elastomeric material (2).

3. The device according to claim 1, **characterized in that** said valve is formed by
- a body (10) comprising said first wall consisting of a thermoplastic rigid element (1) and a thermoplastic elastomeric element (2), adhering to each other, and forming a first wall of said tubular channel and
- a second wall (5) forming a wall of said tubular channel,
wherein the valve is formed between said first wall and said second wall (5) and two parts are irreversibly bonded to each other.

4. The device according to any of claims 1 to 3, wherein said device is a container for holding, delivering, receiving or analyzing a fluid.

5. The device according to any of the proceeding claims, wherein said device comprises one or more chambers to receive a fluid.

6. The device according to any of the proceeding claims, wherein the thermoplastic elastomeric material is selected from the group of thermoplastic polyolefins, thermoplastic polyurethanes, styrol-block polymers and thermoplastic vulcanicates.

7. The device according to any of the proceeding claims, wherein said thermoplastic rigid material is selected from the group of polypropylene, polyethylene, polystyrene, polycarbonate, polycarbonate and polymethylmethacrylate.

8. The device according to any of the proceeding claims, wherein the second or covering wall is partly or completely involved in forming the irreversible bond is a flexible membrane.

9. The device according to any of the proceeding claims, wherein the second or covering wall is a foil with a total thickness of less than 500 µm.

10. The device according to claim 9, wherein the foil is a laminated foil.

11. The device according to any of the proceeding claims, wherein the total heat transfer-rate is higher than 200 W/m²/K.

12. The device according to any of the proceeding claims, wherein the device is a micro fluidic device.

13. The device according to any of the proceeding claims, **characterized in that** said second or covering wall in said device is accessible to a valve actuator from outside of the device.

14. A method for manufacturing a device having a body comprising a valve in a tubular channel, said valve being formed by a first wall (2) and a covering wall (5), wherein said first wall (2) comprises an elastomeric material, wherein
a) the shape of said first wall (2) is provided to a first injection molding step using a molding fraction reflecting the shape of the first wall (2), and
b) sealing said covering wall (5) to the result of molding step a), such that a valve is formed between said first wall (2) and said covering wall (5).

15. The method according to claim 14, wherein said valve being formed by a body (10) and a covering wall (5), wherein said first wall consisting of an elastomeric thermoplastic material (2) and a rigid thermoplastic material (1), wherein
- the shape of the thermoplastic rigid material (1) is provided to a first injection molding step using a molding fraction reflecting the shape of a thermoplastic rigid element (1),
- the shape of the elastomeric thermoplastic material (2) is given to a second injection molding step, wherein in a mold of the second injection molding step the product of the first molding step is present, and the rigid and elastomeric thermoplastic materials form within this second injection molding step a force fit between said first rigid and said second elastomeric thermoplastic material, and
- sealing the covering wall (5) to the result of the first molding step, such that a valve is formed between said first wall of the body (10) and said covering wall (5).

16. The method according to claims 14 to 15, **characterized in that** said valve comprising a flexible membrane is located in said device to be accessible to a plunger like actuator from outside of the device.

17. The method according to any of claims 14 to 16, wherein the sealing is done by LASER welding, ultrasonic welding, thermal sealing or gluing.

18. A system for analyzing a fluid comprising
- an instrument comprising a valve actuator and
- a device according to any of claims 1 to 13.

19. The system according to claim 18 further comprising at least one reagent.

20. The system according to any of claims 18 to 19, wherein said instrument comprises further means for performing an analysis.

21. The system according to any of claims 18 to 20, further comprising a heating element.

22. The system according to any of claims 18 to 21, wherein said instrument further comprises a detection module.

23. Use of a device according to any of claims 1 to 13 in a method for analysis of a fluid.

24. A method of analyzing a sample or components thereof using one or more reagents comprising
- providing a device according to any of claims 1 to 13 or a system according to any of claims 18 to 22,
- introducing the sample into said device,
- introducing one or more reagent(s) into said device, and
- determining at least one property of a fluid present in the device, which relates to the presence or content of an analyte present in the sample
**characterized in that** at least one fluid flow of a fluid, being a sample, a reagent, a mixture of a sample and a reagent, air being present within the device, an inert gas, process gas or a fluid used for hydraulic or pneumatic control, is controlled by such a valve.

25. The method according to claim 24, wherein said fluid prior or after treatment with said reagents is forced to pass said valve and said valve is closed and/or opened at least once before or after said fluid has passed the valve.
